# EUROPEAN PATENT SPECIFICATION

(11) **EP 3 229 416 B1**
(45) Date of publication and mention of the grant of the patent: **27.11.2019**
(21) Application number: 14908854.4
(22) Date of filing: 27.12.2014
(51) Int. Cl.: H04L 12/70, H04L 12/751, G06Q 30/02, H04L 12/26, H04L 29/06, H04L 12/46, H04L 12/721, H04L 12/715, H04L 12/741

(54) **METHOD AND APPARATUS FOR PROCESSING NOTIFICATION MESSAGE**
VERFAHREN UND VORRICHTUNG ZUR VERARBEITUNG VON BENACHRICHTIGUNGSMELDUNGEN
PROCÉDÉ ET APPAREIL POUR TRAITER UN MESSAGE DE NOTIFICATION

(43) Date of publication of application: 11.10.2017
(73) Proprietor: Huawei Technologies Co., Ltd., Longgang District Shenzhen, Guangdong 518129 (CN)
(72) Inventor: LI, Yan, Shenzhen Guangdong 518129 (CN)
(74) Representative: Gill Jennings & Every LLP
(86) International application number: PCT/CN2014/095229
(87) International publication number: WO 2016/101286

(56) References cited:
- CN-A- 103 299 598
- CN-A- 103 391 296
- CN-A- 103 731 901
- PAKZAD FARZANEH ET AL: "Efficient topology discovery in software defined networks", 2014 8TH INTERNATIONAL CONFERENCE ON SIGNAL PROCESSING AND COMMUNICATION SYSTEMS (ICSPCS), IEEE, 15 December 2014 (2014-12-15), pages 1-8, XP032729210, DOI: 10.1109/ICSPCS.2014.7021050 [retrieved on 2015-01-23]
- LALITH SURESH ET AL: "Towards programmable enterprise WLANS with Odin", HOT TOPICS IN SOFTWARE DEFINED NETWORKS, ACM, 2 PENN PLAZA, SUITE 701 NEW YORK NY 10121-0701 USA, 13 August 2012 (2012-08-13), pages 115-120, XP058008074, DOI: 10.1145/2342441.2342465 ISBN: 978-1-4503-1477-0

## Description

### TECHNICAL FIELD

Embodiments of the present invention relate to the communications field, and more specifically, to an advertisement message processing method and apparatus.

### BACKGROUND

Currently, for issues regarding flexibility and management of deployment of a network element, a concept of software-defined networking (software-defined networking, SDN) is provided in the industry. By means of SDN, control logic and a forwarding function of the network element are decoupled, and the control logic is centrally deployed, so that control and maintenance work of a network can be implemented simply by operating a control plane device, so that management efficiency of the network is improved, and a forwarding plane device is simplified, thereby helping to achieve high performance and reusability of the forwarding device.

A network element in an existing SDN architecture includes a control plane device and a forwarding plane device. In the prior art, the control plane device and the forwarding plane device process an advertisement message. The advertisement message is a type of packet and generally has the following features: 1. The advertisement message is sent periodically, that is, sent once every time interval. 2. The advertisement message is synchronously sent to multiple hosts (HOST), that is, content of the advertisement message is not intended for a single host, and an interaction with the single host is not needed to send the advertisement message. A conventional advertisement message includes a router advertisement message defined in an IPv6 protocol, for example, a beacon beacon message defined in an 802.11 protocol. The control plane device maintains a timer. After the timer expires, the control plane device sends a packet out message to the forwarding plane device, where the packet out message includes an advertisement message and an action to be performed on the advertisement message. After receiving the packet out message, the forwarding plane device performs the action on the advertisement message and sends the advertisement message to multiple hosts in a multicast transmission manner. Because of a particular reason, a particular host does not receive the advertisement message (for example, when the forwarding plane device sends the advertisement message, the host is not powered on), and the host may choose not to wait for a next sending period of an advertisement message, but instead send an advertisement request message immediately. The forwarding plane device receives the advertisement request message, matches the message with a forwarding rule, and sends the advertisement request message to the control plane device after matching succeeds. After receiving the advertisement request message, the control plane device triggers sending of the advertisement message, where processing is the same as that in the foregoing step of sending a message to the forwarding plane device. The forwarding plane device further sends the advertisement message.

Because the advertisement message is periodically sent, each time the advertisement message is sent, at least one signaling interaction between the control plane device and the forwarding plane device is required. In addition, each time a host sends an advertisement request, a signaling interaction between the control plane device and the forwarding plane device is also additionally caused. Therefore, currently, a problem to be urgently resolved is how to reduce excessive signaling interactions between the control plane device and the forwarding plane device and improve performance of the control plane device and the forwarding plane device.

Pakzad Farzaneh et al "Efficient topology discovery in software defined networks" in 8th International Conference on Signal Processing and Communication Systems (2014), pp 1-8 describes improvements to topology discovery in software defined networks.

Lalith Suresh et al "Towards programmable enterprise WLANs with Odin" in Hot Topics in Software Defined Networks (2012) pp 115-120 describes an implementation of enterprise WLAN services as network applications.

### SUMMARY

Embodiments of the present invention provide an advertisement message processing method and apparatus, so as to resolve a current problem to be urgently resolved, which is to effectively reduce excessive signaling interactions between a control plane device and a forwarding plane device and improve performance of the control plane device and the forwarding plane device.

The present invention is defined in the independent claims. The dependent claims define particular embodiments of the invention.

Based on the technical solution provided in the embodiments of the present invention, a control plane device sends an advertisement message to a forwarding plane device to instruct the forwarding plane device to buffer the advertisement message and send the buffered advertisement message to a host, thereby avoiding excessive signaling interactions between the control plane device and the forwarding plane device, so as to improve implementation efficiency of the control plane device and the forwarding plane device, and improve performance of the control plane device and the forwarding plane device.

### BRIEF DESCRIPTION OF DRAWINGS

To describe the technical solutions in the embodiments of the present invention more clearly, the following briefly describes the accompanying drawings required for describing the embodiments of the present invention or the prior art. Apparently, the accompanying drawings in the following description show merely some embodiments of the present invention, and a person of ordinary skill in the art may still derive other drawings from these accompanying drawings without creative efforts.
FIG. 1 is a network architecture diagram according to an embodiment of the present invention;
FIG. 2 is a schematic flowchart of an advertisement message processing method according to an embodiment of the present invention;
FIG. 3 is a schematic flowchart of an advertisement message processing method according to an embodiment of the present invention;
FIG. 4 is a signaling interaction diagram of an advertisement message processing method according to an embodiment of the present invention;
FIG. 5 is a signaling interaction diagram of an advertisement message processing method according to an embodiment of the present invention;
FIG. 6 is a signaling interaction diagram of an advertisement message processing method according to an embodiment of the present invention;
FIG. 7 is a schematic block diagram of an advertisement message processing apparatus according to an embodiment of the present invention;
FIG. 8 is a schematic block diagram of an advertisement message processing apparatus according to an embodiment of the present invention;
FIG. 9 is a schematic block diagram of an advertisement message processing apparatus according to an embodiment of the present invention; and
FIG. 10 is a schematic block diagram of an advertisement message processing apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, for example, a Global System for Mobile Communications (Global System of Mobile communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, LTE time division duplex (Time Division Duplex, "TDD" for short), a Universal Mobile Telecommunications System (Universal Mobile Telecommunication System, "UMTS" for short), Worldwide Interoperability for Microwave Access (Worldwide Interoperability for Microwave Access, "WiMAX" for short), a Wireless Local Area Network (Wireless Local Area Networks, "WLAN" for short) communications system.

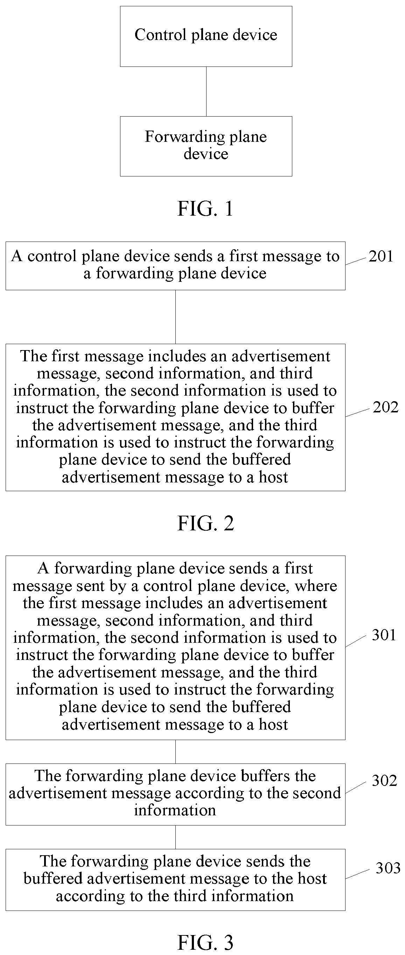

FIG. 1 is a network architecture diagram according to an embodiment of the present invention. For other embodiments of the present invention, refer to the network architecture diagram of the present invention.

As shown in FIG. 1, in a network architecture diagram composed of a control plane device and a forwarding plane device,
the control plane device is responsible for determining a forwarding action (such as forwarding, discarding, modifying a packet header, encapsulating, or decapsulating) of the traffic flow according to a packet feature (such as an IP quintuplet or an Ethernet header), and delivers a corresponding flow rule (including flow matching information such as an IP quintuplet, an Ethernet header, and a corresponding action to be performed) to the forwarding plane device. The forwarding plane device obtains and stores the flow rule and performs the corresponding action on a subsequent packet that meets the flow rule, so as to implement forwarding or processing of the packet.

Specifically, in a Wireless Local Area Network WLAN using an SDN concept, the control plane device may be an access controller (Access Controller, "AC" for short), and the forwarding plane device may be an access point (Access Point, "AP" for short). The AC performs centralized deployment and generates a beacon frame to simplify processing of the AP. The beacon frame needs to be periodically sent to a STA (station), so that the STA may obtain system information of the WLAN network according to the beacon frame, and accesses a network according to the information or adjusts a wireless transmission behavior of the STA according to the information. The STA is equivalent to a host.

Alternatively, in an IPv6 network using an SDN concept, the control plane device may be a router controller, and the forwarding plane device may be an access router. The router controller maintains information of an available IPv6 address prefix and a binding relationship between the IPv6 address prefix and the access router, and periodically sends a router advertisement message to the host, so that the host that is connected to the access router through the Ethernet may assign an IP address according to the IPv6 prefix bound to the access router. After assigning the IP address, the host may send and receive an IPv6 packet by using the access router. In the IPv6 network, the router controller exists as a control plane device, and the access router exists as a forwarding plane device.

The control plane device and the forwarding plane device of the present invention may be other suitable devices, but the present invention is not limited thereto.

FIG. 2 is a schematic flowchart of an advertisement message processing method according to an embodiment of the present invention. The method may be performed by a control plane device or may be performed by another suitable apparatus, but the present invention is not limited thereto.

As shown in FIG. 2, the method includes the following steps.

S201: The control plane device sends a first message to a forwarding plane device.

The first message may be a packet out message, but the present invention is not limited thereto.

S202: The first message includes an advertisement message, second information, and third information, the second information is used to instruct the forwarding plane device to buffer the advertisement message, and the third information is used to instruct the forwarding plane device to send the buffered advertisement message to a host.

The advertisement message includes a beacon message in a WLAN network or a router advertisement message in an IPv6 network. The advertisement message may be another message, but the present invention is not limited thereto.

The third information is used to instruct the forwarding plane device to set a timer and send the advertisement message to the host after the timer expires. The forwarding plane device may set the timer according to timer information, send the buffered advertisement message to the host after the timer expires, and repeat sending of the buffered advertisement message to the host after the timer expires again. Periodical sending of the advertisement message may be implemented through sending of one message by the control plane device, thereby avoiding excessive periodical signaling interactions between the control plane device and the forwarding plane device, so as to improve implementation efficiency of the control plane device and the forwarding plane device, and improve performance of the control plane device and the forwarding plane device.

Optionally, the first message further includes identification information, and the identification information is used to identify the advertisement message; or
the control plane device receives identification information sent by the forwarding plane device, and the identification information is used to identify the advertisement message and the identification information is assigned by the forwarding plane device to the advertisement message. The first message further includes fourth information, where the fourth information is used to instruct a forwarding plane to generate a forwarding rule, the forwarding rule may be used to match an advertisement request message sent by the host, and the advertisement request message is used to request the forwarding plane to send the advertisement message identified by the identification information; or the control plane device sends the fourth information, where the fourth information is used to instruct a forwarding plane to generate a forwarding rule, the forwarding rule may be used to match an advertisement request message sent by the host, and the advertisement request message is used to request the forwarding plane to send the advertisement message identified by the identification information. Therefore, a controller sends the advertisement message to the forwarding plane device, and the forwarding plane device buffers the advertisement message, where the advertisement message is identified by the identification information. After receiving the advertisement request message sent by the host, the forwarding plane device matches the message with the forwarding rule and sends the advertisement message to the host, thereby avoiding a problem of excessive interface signaling caused by that the advertisement request message needs to be sent to the control plane device and the control plane device sends the advertisement message, thereby avoiding excessive periodical signaling interactions between the control plane device and the forwarding plane device, so as to improve implementation efficiency of the control plane device and the forwarding plane device, and improve performance of the control plane device and the forwarding plane device.

Optionally, that the third information is used to instruct the forwarding plane device to send the buffered advertisement message includes:
the third information is used to instruct the forwarding plane device to read a status of the forwarding plane device and update the buffered advertisement message according to the status of the forwarding plane device; and the third information is further used to instruct the forwarding plane device to set a first timer and send the updated advertisement message to the host after the first timer expires; or the first message further includes fourth information, where the fourth information is used to instruct the forwarding plane device to read a status of the forwarding plane device and update the buffered advertisement message according to the status of the forwarding plane device; and that the third information is used to instruct the forwarding plane device to send the buffered advertisement message includes: the third information is used to instruct the forwarding plane device to set a first timer and send the updated advertisement message to the host after the first timer expires.

Alternatively, that the third information is used to instruct the forwarding plane device to send the buffered advertisement message includes: the third information is used to instruct the forwarding plane device to set a first timer and a second timer and send the buffered advertisement message to the host after the first timer expires; the first message further includes fourth information, where the fourth information is used to instruct the forwarding plane device to read a status of the forwarding plane device and update the buffered advertisement message according to the status of the forwarding plane device; and the third information is further used to instruct the forwarding plane device to send the updated advertisement message to the host after the second timer expires.

The status of the forwarding plane device includes at least one of a buffer status, clock information, or a port status of the forwarding plane device.

Therefore, the control plane device may buffer the advertisement message to the forwarding plane device and instruct the forwarding plane device to read the status of the forwarding plane device and update the buffered advertisement message before the forwarding plane device sends the advertisement message, thereby avoiding a problem of excessive interface signaling caused by that the control plane device needs to read the status of the forwarding plane device before the advertisement message is sent, avoiding excessive periodical signaling interactions between the control plane device and the forwarding plane device, so as to improve implementation efficiency of the control plane device and the forwarding plane device, and improve performance of the control plane device and the forwarding plane device.

For the first message, the advertisement message, the second information, the third information, the fourth information, and the fifth information in this embodiment of the present invention, refer to specific content in the following embodiments. The first message, the advertisement message, the second information, the third information, the fourth information, and the fifth information may be other messages, and details are not described in the present invention. Reference may also be made between other embodiments.

Reference may be made between the method provided in this embodiment of the present invention and other embodiments of the present invention, and details are not described in the present invention.

FIG. 3 is a schematic flowchart of an advertisement message processing method according to an embodiment of the present invention. The method may be performed by any suitable apparatus such as a forwarding plane device, but the present invention is not limited thereto. Reference may be made between the embodiment of the present invention shown in FIG. 3 and relevant steps in FIG. 2, but the present invention is not limited thereto.

As shown in FIG. 3, the method includes the following steps.

S301: The forwarding plane device receives a first message sent by a control plane device.

The first message includes an advertisement message, second information, and third information, the second information is used to instruct the forwarding plane device to buffer the advertisement message, and the third information is used to instruct the forwarding plane device to send the buffered advertisement message to a host.

The advertisement message includes a beacon message in a WLAN network or a router advertisement message in an IPv6 network. The first message is a packet out message.

S302: The forwarding plane device buffers the advertisement message according to the second information.

S303: The forwarding plane device sends the buffered advertisement message to a host according to the third information.

Specifically, the third information is used to instruct the forwarding plane device to set a timer and send the advertisement message to the host after the timer expires. That the forwarding plane device sends the buffered advertisement message to a host according to the third information includes: setting, by the forwarding plane device, the timer according to the third information, and sending the advertisement message to the host after the timer expires.

Optionally, the first message further includes identification information, and the identification information is used to identify the advertisement message; or the forwarding plane device sends identification information to the control plane device, and the identification information is used to identify the advertisement message. The first message further includes fourth information, where the fourth information is used to instruct a forwarding plane to generate a forwarding rule; the forwarding plane device generates the forwarding rule according to the fourth information, where the forwarding rule may be used to match an advertisement request message sent by the host, and the advertisement request message is used to request the forwarding plane to send the advertisement message identified by the identification information; or the forwarding plane device receives fourth information of the control plane device, and the fourth information is used to instruct a forwarding plane to generate a forwarding rule; and the forwarding plane device generates the forwarding rule according to the fourth information, where the forwarding rule may be used to match an advertisement request message sent by the host, and the advertisement request message is used to request the forwarding plane to send the advertisement message identified by the identification information.

Optionally, the third information is used to instruct the forwarding plane device to read a status of the forwarding plane device and update the buffered advertisement message according to the status of the forwarding plane device; the third information is further used to instruct the forwarding plane device to set a first timer and send the updated advertisement message to the host after the first timer expires; and that the forwarding plane device sends the buffered advertisement message to a host according to the third information includes: setting, by the forwarding plane device, the first timer according to the third information, and sending, to the host after the first timer expires, the buffered advertisement message that is updated according to the read status of the forwarding plane device; or the first message further includes fourth information, where the fourth information is used to instruct the forwarding plane device to read a status of the forwarding plane device and update the buffered advertisement message according to the status of the forwarding plane device; the forwarding plane device reads the status of the forwarding plane device according to the fourth information and updates the buffered advertisement message according to the status of the forwarding plane device; and that the forwarding plane device sends the buffered advertisement message to a host according to the third information includes: setting, by the forwarding plane device, a first timer according to the third information, and sending the updated advertisement message to the host after the first timer expires.

Alternatively, the third information is used to instruct the forwarding plane device to set a first timer and a second timer and send the buffered advertisement message to the host after the first timer expires; the forwarding plane device sets the first timer and the second timer according to the third information, and sends the buffered advertisement message to the host after the first timer expires; the first message further includes fourth information, where the fourth information is used to instruct the forwarding plane device to read a status of the forwarding plane device and update the buffered advertisement message according to the status of the forwarding plane device; the third information is further used to instruct the forwarding plane device to send the updated advertisement message to the host after the second timer expires; and the method further includes: sending, by the forwarding plane device, the updated advertisement message to the host according to the third information after the second timer expires.

The status of the forwarding plane device includes at least one of a buffer status, clock information, or a port status of the forwarding plane device.

Optionally, the forwarding plane device receives fifth information sent by the control plane device, where the fifth information is used to instruct the forwarding plane device to update the buffered advertisement message.

Therefore, based on the method provided in this embodiment of the present invention, a control plane device sends an advertisement message to a forwarding plane device, and the forwarding plane device buffers the advertisement message and sends the buffered advertisement message to a host, thereby avoiding excessive periodical signaling interactions between the control plane device and the forwarding plane device, so as to improve implementation efficiency of the control plane device and the forwarding plane device, and improve performance of the control plane device and the forwarding plane device.

For the first message, the advertisement message, the second information, the third information, the fourth information, and the fifth information in this embodiment of the present invention, refer to specific content in the following embodiments. The first message, the advertisement message, the second information, the third information, the fourth information, and the fifth information may be other messages, and details are not described in the present invention. Reference may also be made to each other between other embodiments.

Reference may be made between the method provided in this embodiment of the present invention and other embodiments of the present invention, and details are not described in the present invention.

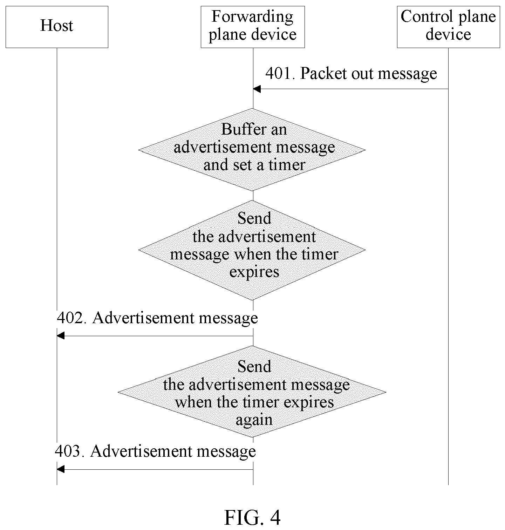

FIG. 4 shows an advertisement message processing method according to an embodiment of the present invention. The method may be performed by a control plane device and a forwarding plane device, or may be performed by another suitable apparatus, but the present invention is not limited thereto. This embodiment of the present invention is a specific embodiment of the embodiments of the present invention that are shown in FIG. 2 and FIG. 3.

As shown in FIG. 4, the method includes the following steps.

S401: The control plane device sends a packet out (packet out) message to the forwarding plane device.

The packet out message includes an advertisement message, a buffering indication, and timer information.

The buffering indication information is used to instruct the forwarding plane device to buffer the advertisement message, and the timer information is used to instruct the forwarding plane device to send the buffered advertisement message to a host after the timer expires.

Further, the packet out message further includes action information for indicating an action that needs to be performed by the forwarding plane device when the advertisement message is sent.

S402: The forwarding plane device buffers an advertisement message and sets a timer according to timer information, and sends the buffered advertisement message to a host after the timer expires.

After sending the message, the forwarding plane device resets the timer according to the timer information.

After receiving the advertisement message, the host automatically assigns an IP address according to a network address prefix in the message.

S403: After the timer expires again, the forwarding plane device sends the buffered advertisement message to the host.

Therefore, based on the method provided in this embodiment of the present invention, a control plane device sends a packet out message, where the packet out message includes an advertisement message, a buffer indication, and timer information, so that a buffering device buffers the advertisement message according to the buffering indication information, sets a timer according to the timer information, sends the advertisement message to a host after the timer expires, sets a timer, and sends the advertisement message again after the timer expires again. Therefore, periodical sending of the advertisement message may be implemented through sending of one message by the control plane device, thereby avoiding excessive signaling interactions between the control plane device and the forwarding plane device, so as to improve implementation efficiency of the control plane device and the forwarding plane device, and improve performance of the control plane device and the forwarding plane device.

Reference may be made between relevant steps in the embodiments of the present invention, and details are not described in the present invention.

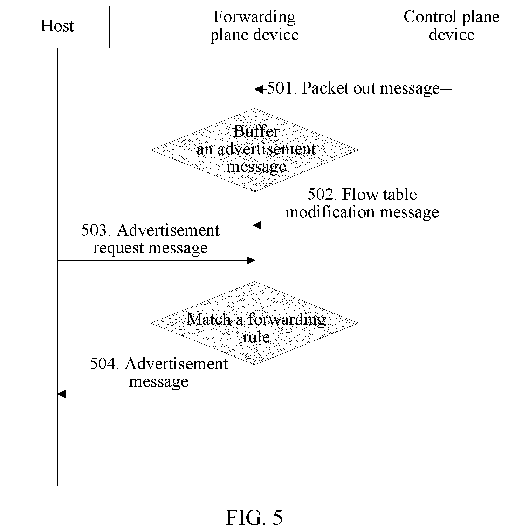

FIG. 5 is a signaling interaction diagram of an advertisement message processing method according to an embodiment of the present invention. The method may be performed by a control plane device and a forwarding plane device, or may be performed by another suitable apparatus, but the present invention is not limited thereto. This embodiment of the present invention is a specific embodiment of the embodiments of the present invention that are shown in FIG. 2 and FIG. 3.

As shown in FIG. 3, the method includes the following steps.

S501: The control plane device sends a packet out message to the forwarding plane device.

The message includes an advertisement message, a buffering indication, and timer information.

Refer to relevant steps in the embodiment shown in FIG. 4 for details.

Specifically, the packet out message further includes identification information, where the identification information is used to identify the advertisement message.

Optionally, the buffer indication may include identification information, where the identification information is used to identify the advertisement message.

Alternatively, the forwarding plane device assigns an identifier to the advertisement message and sends the assigned identifier to the control plane device.

The forwarding plane device may buffer multiple different advertisement messages sent by a controller, where different advertisement messages are distinguished by means of the identification information.

S502: The control plane device sends a flow table modification message to the forwarding plane device.

Specifically, the flow table modification message may be included in the foregoing packet out message, or a controller device separately sends the flow table modification message to the forwarding plane device.

The message is used to instruct the forwarding plane device to generate a forwarding rule. Matching content in the forwarding rule is used to match an advertisement request message sent by a host, and the advertisement request message is used to request the forwarding plane to send the advertisement message identified by the identification information.

S503: A host sends an advertisement request message to the forwarding plane device.

S504: The forwarding plane device receives the advertisement request message, and matches the message with the foregoing generated forwarding rule, and sends, according to the forwarding rule, the advertisement message identified by the identification information to the host.

Before sending the advertisement message, the forwarding plane device needs to perform an action that needs to be performed by the forwarding plane device before the forwarding plane device sends the advertisement message and that the control plane device instructs the forwarding plane device to perform in Step 501, and sends the message to the host after the action is performed. It should be noted that because sending of the message is triggered by matching of the forwarding rule, the timer is not to be reset.

Therefore, based on the method provided in this embodiment of the present invention, a control plane device may buffer an advertisement message to a forwarding plane device and instructs the forwarding plane device to send the buffered advertisement message after the forwarding plane device matches a request message of a particular type, thereby avoiding a problem of excessive interface signaling caused by that a request message of a particular type needs to be sent to the control plane device and the control plane device sends the advertisement message, thereby avoiding excessive periodical signaling interactions between the control plane device and the forwarding plane device, so as to improve implementation efficiency of the control plane device and the forwarding plane device, and improve performance of the control plane device and the forwarding plane device.

Reference may be made between relevant steps in the embodiments of the present invention, and details are not described in the present invention.

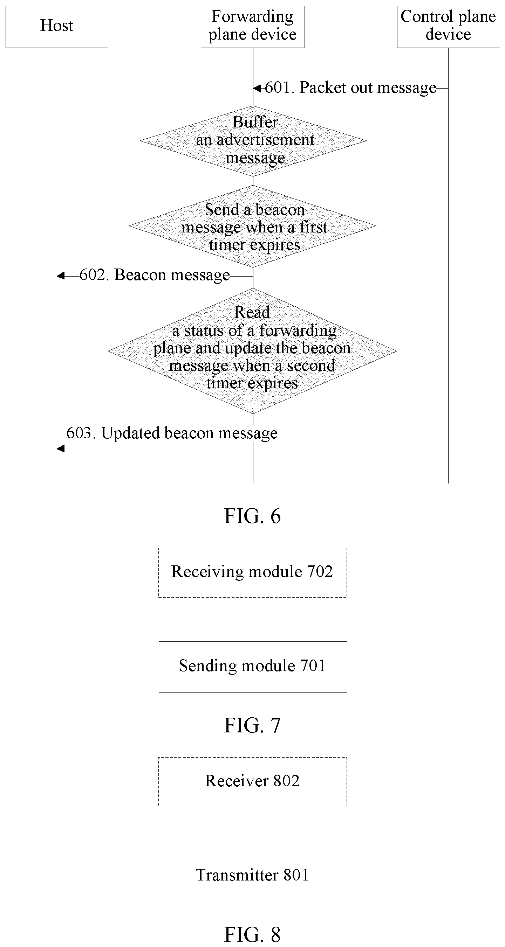

FIG. 6 is a signaling interaction diagram of an advertisement message processing method according to an embodiment of the present invention. The method may be performed by a control plane device and a forwarding plane device, or may be performed by another suitable apparatus, but the present invention is not limited thereto. This embodiment of the present invention is a specific embodiment of the embodiments of the present invention that are shown in FIG. 2 and FIG. 3.

A scenario of this embodiment is processing of a beacon message in a WLAN network. The beacon message is also a type of advertisement message, where some special beacon messages include some status information of the forwarding plane device, and the status information changes dynamically and cannot be generated in the control plane device in advance. These special beacon messages are also periodically sent, and periods of the special beacon messages are integer multiples of a conventional beacon message (not including status information of the forwarding plane device) (for example, a conventional beacon frame is sent once every 100 milliseconds, and a special beacon frame is sent once every 300 milliseconds). The foregoing advertisement message may be another advertisement message, but the present invention is not limited thereto.

Specifically, as shown in FIG. 6, the method includes the following steps.

S601: The control plane device sends a packet out message to the forwarding plane device.

The packet out message includes an advertisement message, a buffering indication, and timer information.

The advertisement message may be a beacon message. The advertisement message may be another message, but the present invention is not limited thereto.

The timer information may be used to instruct the forwarding plane device to set two timers (a first timer and a second timer) and send the buffered advertisement message to a host after the first timer expires.

Optionally, the buffering indication is used to instruct the forwarding plane device to buffer the beacon message, and the timer information is used to instruct the forwarding plane device to set a first timer and sends the buffered beacon message after the timer expires.

The packet out message further includes action information, where the action information is used to instruct to read a status of the forwarding plane device and update the buffered beacon message. The forwarding plane device includes, but is not limited to, one or several of the following information: status information of a particular buffer of the forwarding plane device (for example, a destination MAC address of a buffering packet in the buffer), status information (for example, whether a port is congested) of a particular port (including a radio port) of the forwarding plane device, and local clock information of the forwarding plane device. The buffered beacon message is updated, that is, the beacon message is updated by using foregoing status values. Specifically, updating of the beacon message may be implemented by adding a new parameter for the beacon message or modifying an existing parameter of the beacon frame. During specific implementation, a method of preventing the forwarding plane device from understanding the beacon message may be used. Modification of an existing parameter is used as an example, in which a specific action may be that: a method of updating the buffered beacon message is updating content that starts from an X^{th} byte and that has a length of Y bytes as the read status information. A reason of preventing the forwarding plane device from understanding the beacon message is to reduce intelligence of the forwarding plane device and avoiding binding of the forwarding plane device and a particular advertisement message.

S602: After a first timer expires, the forwarding plane device sends a buffered beacon message to a host.

The forwarding plane device performs a corresponding action.

Optionally, the buffering indication information may be used for the forwarding plane device to read a status of the forwarding plane device and update the buffered beacon message, and may be used to instruct the forwarding device to send the updated beacon message to the host according to the foregoing action information after the first timer expires.

Alternatively, the timer information message may be used to instruct the forwarding plane device to send, to the host after the first timer expires, the beacon message that is updated after the forwarding plane device reads the status of the forwarding plane device according to the action information.

The forwarding plane device resets the timer.

S603: After a second timer expires, the forwarding plane device sends an updated beacon message to the host.

The forwarding plane device reads the status of the forwarding plane device according to the action information and updates the buffered beacon message. For example, a destination address (that is, the status information of the particular buffer status of the forwarding plane device) of a downlink packet buffered by the forwarding plane device is read, and a traffic indication map (traffic indication map, TIM) parameter of the buffered beacon frame is set according to the destination address. After the buffered message is updated, the updated beacon message is sent to the host.

After receiving the beacon message having the TIM parameter, the host that is sleeping is awakened from sleep according to the buffer status, and receives the buffered packet from the forwarding plane device.

If the first timer and the second timer synchronously expire at a particular moment, an action of the timer with a longer time is performed.

Some hosts that are not connected to the network may start a network association procedure (association) after receiving the beacon message. After completing the network association procedure, the control plane device and the host may modify the beacon message. For example, before the host is added, all other hosts support the 802.11n wireless standard, but the newly added host does not support the 802.11n wireless standard. In this case, the control plane device needs to notify, by using the beacon message, other hosts of modifying actions of the other hosts to adapt to the new host. The control plane device sends a new packet out message and instructs the forwarding plane device to update the buffered beacon message. Both the message and the packet out message in step 1 include a same identifier of the buffered message, to enable the forwarding plane device to be associated with the buffered message in step 1. Optionally, the control plane device may select to update or select not to update timer information of the buffered message. If the control plane device does not update the timer information, the forwarding plane device does not reset the timer and sends a new beacon message after the original timer expires. If the control plane device updates the timer information, the forwarding plane device resets the timer and sends a new beacon frame after the new timer expires. Similarly, the control plane device may also select to update or select not to update an action list of the buffered message.

Therefore, based on the method provided in this embodiment of the present invention, a control plane device may buffer an advertisement message to a forwarding plane device and instruct the forwarding plane device to read a status of the forwarding plane device and update the buffered advertisement message before the forwarding plane device sends the advertisement message, thereby avoiding a problem of excessive interface signaling caused by that the control plane device needs to read the status of the forwarding plane device before the advertisement message is sent, avoiding excessive periodical signaling interactions between the control plane device and the forwarding plane device, so as to improve implementation efficiency of the control plane device and the forwarding plane device, and improve performance of the control plane device and the forwarding plane device.

Reference may be made between relevant steps in the embodiments of the present invention, and details are not described in the present invention.

FIG. 7 is a schematic block diagram of an advertisement message processing apparatus according to an embodiment of the present invention. The apparatus may be any suitable apparatus, for example, a control plane device, but the present invention is not limited thereto. The apparatus may be used to perform the methods provided in the foregoing embodiments.

As shown in FIG. 7, the apparatus includes:
a sending module 701, configured to send a first message to a forwarding plane device, where
the first message includes an advertisement message, second information, and third information, the second information is used to instruct the forwarding plane device to buffer the advertisement message, and the third information is used to instruct the forwarding plane device to send the buffered advertisement message to a host.

The advertisement message includes a beacon message in a WLAN network or a router advertisement message in an IPv6 network. The first message is a packet out message.

Specifically, that the third information is used to instruct the forwarding plane device to send the buffered advertisement message to a host includes:
the third information is used to instruct the forwarding plane device to set a timer and send the advertisement message to the host after the timer expires.

Optionally, the first message further includes identification information, and the identification information is used to identify the advertisement message; or
the apparatus further includes a receiving module 702, configured to receive the identification information sent by the forwarding plane device, where the identification information is used to identify the advertisement message.

Optionally, the first message further includes fourth information, where the fourth information is used to instruct a forwarding plane to generate a forwarding rule, the forwarding rule may be used to match an advertisement request message sent by the host, and the advertisement request message is used to request the forwarding plane to send the advertisement message identified by the identification information; or the sending module 701 is further configured to send fourth information, where the fourth information is used to instruct a forwarding plane to generate a forwarding rule, the forwarding rule may be used to match an advertisement request message sent by the host, and the advertisement request message is used to request the forwarding plane to send the advertisement message identified by the identification information.

Optionally, that the third information is used to instruct the forwarding plane device to send the buffered advertisement message includes: the third information is used to instruct the forwarding plane device to read a status of the forwarding plane device and update the buffered advertisement message according to the status of the forwarding plane device; and the third information is further used to instruct the forwarding plane device to set a first timer and send the updated advertisement message to the host after the first timer expires; or the first message further includes fourth information, where the fourth information is used to instruct the forwarding plane device to read a status of the forwarding plane device and update the buffered advertisement message according to the status of the forwarding plane device; and that the third information is used to instruct the forwarding plane device to send the buffered advertisement message includes: the third information is used to instruct the forwarding plane device to set a first timer and send the updated advertisement message to the host after the first timer expires.

Optionally, that the third information is used to instruct the forwarding plane device to send the buffered advertisement message includes: the third information is used to instruct the forwarding plane device to set a first timer and a second timer and send the buffered advertisement message to the host after the first timer expires; the first message further includes fourth information, where the fourth information is used to instruct the forwarding plane device to read a status of the forwarding plane device and update the buffered advertisement message according to the status of the forwarding plane device; and the third information is further used to instruct the forwarding plane device to send the updated advertisement message to the host after the second timer expires. The status of the forwarding plane device includes at least one of a buffer status, clock information, or a port status of the forwarding plane device.

The sending module 701 is further configured to send fifth information to the forwarding plane device, where the fifth information is used to instruct the forwarding plane device to update the buffered advertisement message.

Therefore, based on the apparatus provided in this embodiment of the present invention, an advertisement message is sent to a forwarding plane device for instructing the forwarding plane device to buffer the advertisement message and send the buffered advertisement message to a host, thereby avoiding excessive periodical signaling interactions between a control plane device and the forwarding plane device, so as to improve implementation efficiency of the control plane device and the forwarding plane device, and improve performance of the control plane device and the forwarding plane device.

FIG. 8 is a schematic block diagram of an advertisement message processing apparatus according to an embodiment of the present invention. The apparatus may be any suitable apparatus, for example, a control plane device, but the present invention is not limited thereto. The apparatus may be used to perform the method provided in the foregoing embodiment.

As shown in FIG. 8, the apparatus includes a transmitter 801, and may further include a receiver 802. For specific content of the apparatus, refer to the apparatus provided in the embodiment of the present invention shown in FIG. 7, and details are not described herein in the present invention.

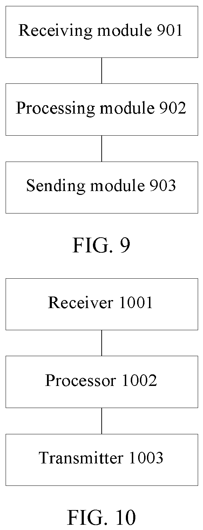

FIG. 9 is a schematic block diagram of an advertisement message processing apparatus according to an embodiment of the present invention. The apparatus may be any suitable apparatus, for example, a forwarding plane device, but the present invention is not limited thereto. The apparatus may be used to perform the methods provided in the foregoing embodiments.

As shown in FIG. 9, the apparatus includes:
a receiving module 901, configured to receive a first message sent by a control plane device, where
the first message includes an advertisement message, second information, and third information, the second information is used to instruct the forwarding plane device to buffer the advertisement message, and the third information is used to instruct the forwarding plane device to send the buffered advertisement message to a host;
the advertisement message includes a beacon message in a WLAN network or a router advertisement message in an IPv6 network, where the first message is a packet out message;
a processing module 902, configured to buffer the advertisement message according to the second information; and
a sending module 903, configured to send the buffered advertisement message to the host according to the third information.

Specifically, the third information is used to instruct the forwarding plane device to set a timer and send the advertisement message to the host after the timer expires; and the processing module 902 is further configured to set the timer according to the third information and instruct the sending module to instruct, after the timer expires, the sending module 903 to send the advertisement message to the host.

Optionally, the first message further includes identification information, and the identification information is used to identify the advertisement message; or
the forwarding plane device sends identification information to the control plane device, and the identification information is used to identify the advertisement message. Further, the first message further includes fourth information, where the fourth information is used to instruct a forwarding plane to generate a forwarding rule; the processing module 902 is further configured to generate the forwarding rule according to the fourth information, where the forwarding rule may be used to match an advertisement request message sent by the host, and the advertisement request message is used to request the forwarding plane to send the advertisement message identified by the identification information; or the receiving module 901 is further configured to receive fourth information of the control plane device, where the fourth information is used to instruct a forwarding plane to generate a forwarding rule; the processing module 902 is further configured to generate the forwarding rule according to the fourth information, where the forwarding rule may be used to match an advertisement request message sent by the host, and the advertisement request message is used to request the forwarding plane to send the advertisement message identified by the identification information.

Optionally, the third information is used to instruct the forwarding plane device to read a status of the forwarding plane device and update the buffered advertisement message according to the status of the forwarding plane device; the third information is further used to instruct the forwarding plane device to set a first timer and send the updated advertisement message to the host after the first timer expires; and the processing module 902 is further configured to set the first timer according to according to the third information and instruct, after the first timer expires, the sending module 903 to send, to the host, the buffered advertisement message that is updated according to the read status of the forwarding plane device; or the first message further includes fourth information, where the fourth information is used to instruct the forwarding plane device to read a status of the forwarding plane device and update the buffered advertisement message according to the status of the forwarding plane device; the processing module 902 is further configured to read the status of the forwarding plane device according to the fourth information and update the buffered advertisement message according to the status of the forwarding plane device; and the processing module 902 is further configured to set a first timer according to the third information and instruct, after the first timer expires, the sending module 903 to send the updated advertisement message to the host.

Optionally, the third information is used to instruct the forwarding plane device to set a first timer and a second timer and send the buffered advertisement message to the host after the first timer expires; the processing module 902 is configured to set the first timer and the second timer according to the third information, and instruct the sending module 903 to send the buffered advertisement message to the host after the first timer expires; the first message further includes fourth information, where the fourth information is used to instruct the forwarding plane device to read a status of the forwarding plane device and update the buffered advertisement message according to the status of the forwarding plane device; the third information is further used to instruct the forwarding plane device to send the updated advertisement message to the host after the second timer expires; and the processing module 902 is further configured to send the updated advertisement message to the host according to the third information after the second timer expires. The status of the forwarding plane device includes at least one of a buffer status, clock information, or a port status of the forwarding plane device.

Further, the receiving module 901 is further configured to receive fifth information sent by the control plane device, where the fifth information is used to instruct the forwarding plane device to update the buffered advertisement message.

Therefore, based on the apparatus provided in this embodiment of the present invention, a control plane device sends an advertisement message to a forwarding plane device, and the forwarding plane device buffers the advertisement message and sends the buffered advertisement message to a host, thereby avoiding excessive periodical signaling interactions between the control plane device and the forwarding plane device, so as to improve implementation efficiency of the control plane device and the forwarding plane device, and improve performance of the control plane device and the forwarding plane device.

FIG. 10 is a schematic block diagram of an advertisement message processing apparatus according to an embodiment of the present invention. The apparatus may be any suitable apparatus, for example, a forwarding plane device, but the present invention is not limited thereto. The apparatus may be used to perform the method provided in the foregoing embodiment.

As shown in FIG. 10, the apparatus includes:
a receiving module 1001, configured to receive a first message sent by a control plane device, where
the first message includes an advertisement message, second information, and third information, the second information is used to instruct the forwarding plane device to buffer the advertisement message, and the third information is used to instruct the forwarding plane device to send the buffered advertisement message to a host;
the advertisement message includes a beacon message in a WLAN network or a router advertisement message in an IPv6 network, where the first message is a packet out message;
a processor 1002, configured to buffer the advertisement message according to the second information; and
a transmitter 1003, configured to send the buffered advertisement message to the host according to the third information.

Specifically, the third information is used to instruct the forwarding plane device to set a timer and send the advertisement message to the host after the timer expires; and the processor 1002 is further configured to set the timer according to the third information and instruct the sending module to instruct, after the timer expires, the transmitter 1003 to send the advertisement message to the host.

Optionally, the first message further includes identification information, and the identification information is used to identify the advertisement message; or
the forwarding plane device sends identification information to the control plane device, and the identification information is used to identify the advertisement message. Further, the first message further includes fourth information, where the fourth information is used to instruct a forwarding plane to generate a forwarding rule; and the processor 1002 is further configured to generate the forwarding rule according to the fourth information, where the forwarding rule may be used to match an advertisement request message sent by the host, and the advertisement request message is used to request the forwarding plane to send the advertisement message identified by the identification information; or the receiver 1001 is further configured to receive fourth information of the control plane device, where the fourth information is used to instruct a forwarding plane to generate a forwarding rule; and the processor 1002 is further configured to generate the forwarding rule according to the fourth information, where the forwarding rule may be used to match an advertisement request message sent by the host, and the advertisement request message is used to request the forwarding plane to send the advertisement message identified by the identification information.

Optionally, the third information is used to instruct the forwarding plane device to read a status of the forwarding plane device and update the buffered advertisement message according to the status of the forwarding plane device; the third information is further used to instruct the forwarding plane device to set a first timer and send the updated advertisement message to the host after the first timer expires; and the processor 1002 is further configured to set the first timer according to according to the third information and instruct, after the first timer expires, the transmitter 1003 to send, to the host, the buffered advertisement message that is updated according to the read status of the forwarding plane device; or the first message further includes fourth information, where the fourth information is used to instruct the forwarding plane device to read a status of the forwarding plane device and update the buffered advertisement message according to the status of the forwarding plane device; the processor 1002 is further configured to read the status of the forwarding plane device according to the fourth information and update the buffered advertisement message according to the status of the forwarding plane device; and the processor 1002 is further configured to set a first timer according to the third information and instruct, after the first timer expires, the transmitter 1003 to send the updated advertisement message to the host.

Optionally, the third information is used to instruct the forwarding plane device to set a first timer and a second timer and send the buffered advertisement message to the host after the first timer expires; the processor 1002 is configured to set the first timer and the second timer according to the third information, and instruct the transmitter 1003 to send the buffered advertisement message to the host after the first timer expires; the first message further includes fourth information, where the fourth information is used to instruct the forwarding plane device to read a status of the forwarding plane device and update the buffered advertisement message according to the status of the forwarding plane device; the third information is further used to instruct the forwarding plane device to send the updated advertisement message to the host after the second timer expires; and the processor 1002 is further configured to send the updated advertisement message to the host according to the third information after the second timer expires. The status of the forwarding plane device includes at least one of a buffer status, clock information, or a port status of the forwarding plane device.

Further, the receiver 1001 is further configured to receive fifth information sent by the control plane device, where the fifth information is used to instruct the forwarding plane device to update the buffered advertisement message.

Therefore, based on the apparatus provided in this embodiment of the present invention, a control plane device sends an advertisement message to a forwarding plane device, and the forwarding plane device buffers the advertisement message and sends the buffered advertisement message to a host, thereby avoiding excessive periodical signaling interactions between the control plane device and the forwarding plane device, so as to improve implementation efficiency of the control plane device and the forwarding plane device, and improve performance of the control plane device and the forwarding plane device.

It should be understood that in this embodiment of the present invention, the processor may be a central processing unit (Central Processing Unit, "CPU" for short), and the processor may be further another general-purpose processor, a digital signal processor (DSP), an application-specific integrated circuit (ASIC), a field-programmable gate array (FPGA) or another programmable logical device, a discrete gate or transistor logical device, a discrete hardware component, or the like. The general purpose processor may be a microprocessor or the processor may be any conventional processor or the like.

During an implementation process, the foregoing steps may be completed by means of an integrated logic circuit of hardware of the processor or instructions in a software form. Steps of the methods disclosed with reference to the embodiments of the present invention may be directly performed and completed by means of a hardware processor, or may be performed and completed by using a combination of hardware and software modules in the processor. The software module may be located in a mature storage medium in the field, where the storage medium is, for example, a random access memory, a flash memory, a read-only memory, a programmable read-only memory, an electrically-erasable programmable memory, or a register. The storage medium is located in the memory, and the processor reads information in the memory and completes the steps in the foregoing methods in combination with hardware of the processor. To avoid repetition, details are not described herein again.

Reference may be made between relevant content in the embodiments provided in the present invention, and details are not described herein again.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. An advertisement message processing method, comprising:
sending (201), by a control plane device, a first message to a forwarding plane device, wherein
the first message comprises an advertisement message, second information, and third information, the second information is used to instruct the forwarding plane device to buffer the advertisement message, and the third information is used to instruct the forwarding plane device to send the buffered advertisement message to a host;
**characterized in that** the method further comprises receiving, by the control plane device, identification information from the forwarding plane device, and the identification information is used to identify the advertisement message;
wherein the first message further comprises fourth information, wherein the fourth information is used to instruct a forwarding plane device to generate a forwarding rule, the forwarding rule is used to match an advertisement request message sent by the host, and the advertisement request message is used to request the forwarding plane device to send the buffered advertisement message identified by the identification information.

2. The method according to claim 1, wherein that the third information is used to instruct the forwarding plane device to send the buffered advertisement message to a host comprises:
the third information is used to instruct the forwarding plane device to set a timer and send the advertisement message to the host after the timer expires.

3. The method according to claim 1 or 2, wherein that the third information is used to instruct the forwarding plane device to send the buffered advertisement message comprises:
the third information is used to instruct the forwarding plane device to read a status of the forwarding plane device and update the buffered advertisement message according to the status of the forwarding plane device; and
the third information is further used to instruct the forwarding plane device to set a first timer and send the updated advertisement message to the host after the first timer expires; or
wherein the fourth information is further used to instruct the forwarding plane device to read a status of the forwarding plane device and update the buffered advertisement message according to the status of the forwarding plane device; and
that the third information is used to instruct the forwarding plane device to send the buffered advertisement message comprises:
the third information is used to instruct the forwarding plane device to set a first timer and send the updated advertisement message to the host after the first timer expires.

4. The method according to claim 1 or 2, wherein that the third information is used to instruct the forwarding plane device to send the buffered advertisement message comprises:
the third information is used to instruct the forwarding plane device to set a first timer and a second timer and send the buffered advertisement message to the host after the first timer expires;
wherein the fourth information is further used to instruct the forwarding plane device to read a status of the forwarding plane device and update the buffered advertisement message according to the status of the forwarding plane device; and
the third information is further used to instruct the forwarding plane device to send the updated advertisement message to the host after the second timer expires.

5. An advertisement message processing method, comprising:
receiving (301), by a forwarding plane device, a first message sent by a control plane device, wherein
the first message comprises an advertisement message, second information, and third information, the second information is used to instruct the forwarding plane device to buffer the advertisement message, and the third information is used to instruct the forwarding plane device to send the buffered advertisement message to a host;
buffering (302), by the forwarding plane device, the advertisement message according to the second information; and
sending (303), by the forwarding plane device, the buffered advertisement message to the host according to the third information;
**characterized in that** the first message further includes identification information, and the identification information is used to identify the advertisement message;
wherein the first message further includes fourth information, where the fourth information is used to instruct a forwarding plane device to generate a forwarding rule; the forwarding plane device generates the forwarding rule according to the fourth information, where the forwarding rule is used to match an advertisement request message sent by the host, and the advertisement request message is used to request the forwarding plane device to send the advertisement message identified by the identification information.

6. The method according to claim 5, wherein the third information is used to instruct the forwarding plane device to set a timer and send the advertisement message to the host after the timer expires; and
the sending, by the forwarding plane device, the buffered advertisement message to the host according to the third information comprises:
setting, by the forwarding plane device, the timer according to the third information, and sending the advertisement message to the host after the timer expires.

7. The method according to claim 5 or 6, wherein the third information is used to instruct the forwarding plane device to read a status of the forwarding plane device and update the buffered advertisement message according to the status of the forwarding plane device; the third information is further used to instruct the forwarding plane device to set a first timer and send the updated advertisement message to the host after the first timer expires; and
the sending, by the forwarding plane device, the buffered advertisement message to the host according to the third information comprises:
setting, by the forwarding plane device, the first timer according to the third information, and sending, to the host after the first timer expires, the buffered advertisement message that is updated according to the read status of the forwarding plane device; or
wherein the fourth information is further used to instruct the forwarding plane device to read a status of the forwarding plane device and update the buffered advertisement message according to the status of the forwarding plane device;
the forwarding plane device reads the status of the forwarding plane device according to the fourth information and updates the buffered advertisement message according to the status of the forwarding plane device; and
the sending, by the forwarding plane device, the buffered advertisement message to the host according to the third information comprises:
setting, by the forwarding plane device, a first timer according to the third information, and sending the updated advertisement message to the host after the first timer expires.

8. The method according to claim 5 or 6, wherein the third information is used to instruct the forwarding plane device to set a first timer and a second timer and send the buffered advertisement message to the host after the first timer expires;
the forwarding plane device sets the first timer and the second timer according to the third information, and sends the buffered advertisement message to the host after the first timer expires;
wherein the fourth information is further used to instruct the forwarding plane device to read a status of the forwarding plane device and update the buffered advertisement message according to the status of the forwarding plane device;
the third information is further used to instruct the forwarding plane device to send the updated advertisement message to the host after the second timer expires; and
the method further comprises:
sending, by the forwarding plane device, the updated advertisement message to the host according to the third information after the second timer expires.

9. An advertisement message processing apparatus, comprising:
a sending module (701), configured to send a first message to a forwarding plane device, wherein
the first message comprises an advertisement message, second information, and third information, the second information is used to instruct the forwarding plane device to buffer the advertisement message, and the third information is used to instruct the forwarding plane device to send the buffered advertisement message to a host;
**characterized in that** the apparatus method further comprises a receiving module configured to receive identification information, and the identification information is used to identify the advertisement message;
wherein the first message further comprises fourth information, wherein the fourth information is used to instruct a forwarding plane device to generate a forwarding rule, the forwarding rule is used to match an advertisement request message sent by the host, and the advertisement request message is used to request the forwarding plane device to send the advertisement message identified by the identification information.

10. The apparatus according to claim 9, wherein that the third information is used to instruct the forwarding plane device to send the buffered advertisement message to a host comprises:
the third information is used to instruct the forwarding plane device to set a timer and send the advertisement message to the host after the timer expires.

11. An advertisement message processing apparatus, comprising:
a receiving module (901), configured to receive a first message sent by a control plane device, wherein
the first message comprises an advertisement message, second information, and third information, the second information is used to instruct the forwarding plane device to buffer the advertisement message, and the third information is used to instruct the forwarding plane device to send the buffered advertisement message to a host;
a processing module (902), configured to buffer the advertisement message according to the second information; and
a sending module (903), configured to send the buffered advertisement message to the host according to the third information;
**characterized in that** the first message further includes identification information, and the identification information is used to identify the advertisement message;
wherein the first message further includes fourth information, where the fourth information is used to instruct a forwarding plane device to generate a forwarding rule; the forwarding plane device generates the forwarding rule according to the fourth information, where the forwarding rule is used to match an advertisement request message sent by the host, and the advertisement request message is used to request the forwarding plane device to send the advertisement message identified by the identification information.

12. The apparatus according to claim 11, wherein the third information is used to instruct the forwarding plane device to set a timer and send the advertisement message to the host after the timer expires; and
the processing module is further configured to set the timer according to the third information and instruct the sending module to instruct, after the timer expires, the sending module to send the advertisement message to the host.

## Patentansprüche

1. Ankündigungsnachrichtverarbeitungsverfahren, Folgendes umfassend:
Senden (201) einer ersten Nachricht an eine Weiterleitungsebenenvorrichtung durch eine Steuerebenenvorrichtung, wobei die erste Nachricht eine Ankündigungsnachricht, zweite Informationen und dritte Informationen umfasst, wobei die zweiten Informationen verwendet werden, um die Weiterleitungsebenenvorrichtung anzuweisen, die Ankündigungsnachricht zu puffern, und die dritten Informationen verwendet werden, um die Weiterleitungsebenenvorrichtung anzuweisen, die gepufferte Ankündigungsnachricht an einen Host zu senden;
**dadurch gekennzeichnet, dass** das Verfahren ferner ein Empfangen von Identifikationsinformationen von der Weiterleitungsebenenvorrichtung durch die Steuerebenenvorrichtung umfasst und die Identifikationsinformationen verwendet werden, um die Ankündigungsnachricht zu identifizieren;
wobei die erste Nachricht ferner vierte Informationen umfasst, wobei die vierten Informationen verwendet werden, um eine Weiterleitungsebenenvorrichtung anzuweisen, eine Weiterleitungsregel zu erzeugen, die Weiterleitungsregel verwendet wird, um mit einer von dem Host gesendeten Ankündigungsanforderungsnachricht übereinzustimmen, und die Ankündigungsanforderungsnachricht verwendet wird, um anzufordern, dass die Weiterleitungsebenenvorrichtung die durch die Identifikationsinformationen identifizierte gepufferte Ankündigungsnachricht sendet.

2. Verfahren nach Anspruch 1, wobei, dass die dritten Informationen verwendet werden, um die Weiterleitungsebenenvorrichtung anzuweisen, die gepufferte Ankündigungsnachricht an einen Host zu senden, Folgendes umfasst:
die dritten Informationen werden verwendet, um die Weiterleitungsebenenvorrichtung anzuweisen, einen Zeitmesser einzustellen und die Ankündigungsnachricht an den Host zu senden, nachdem der Zeitmesser abgelaufen ist.

3. Verfahren nach Anspruch 1 oder 2, wobei, dass die dritten Informationen verwendet werden, um die Weiterleitungsebenenvorrichtung anzuweisen, die gepufferte Ankündigungsnachricht zu senden, Folgendes umfasst:
die dritten Informationen werden verwendet, um die Weiterleitungsebenenvorrichtung anzuweisen, einen Status der Weiterleitungsebenenvorrichtung zu lesen und die gepufferte Ankündigungsnachricht gemäß dem Status der Weiterleitungsebenenvorrichtung zu aktualisieren; und
die dritten Informationen werden ferner verwendet, um die Weiterleitungsebenenvorrichtung anzuweisen, einen ersten Zeitmesser einzustellen und die aktualisierte Ankündigungsnachricht an den Host zu senden, nachdem der erste Zeitmesser abgelaufen ist; oder
wobei die vierten Informationen ferner verwendet werden, um die Weiterleitungsebenenvorrichtung anzuweisen, einen Status der Weiterleitungsebenenvorrichtung zu lesen und die gepufferte Ankündigungsnachricht gemäß dem Status der Weiterleitungsebenenvorrichtung zu aktualisieren; und,
dass die dritten Informationen verwendet werden, um die Weiterleitungsebenenvorrichtung anzuweisen, die gepufferte Ankündigungsnachricht zu senden, Folgendes umfasst:
die dritten Informationen werden verwendet, um die Weiterleitungsebenenvorrichtung anzuweisen, einen ersten Zeitmesser einzustellen und die aktualisierte Ankündigungsnachricht an den Host zu senden, nachdem der erste Zeitmesser abgelaufen ist.

4. Verfahren nach Anspruch 1 oder 2, wobei, dass die dritten Informationen verwendet werden, um die Weiterleitungsebenenvorrichtung anzuweisen, die gepufferte Ankündigungsnachricht zu senden, Folgendes umfasst:
die dritten Informationen werden verwendet, um die Weiterleitungsebenenvorrichtung anzuweisen, einen ersten Zeitmesser und einen zweiten Zeitmesser einzustellen und die gepufferte Ankündigungsnachricht an den Host zu senden, nachdem der erste Zeitmesser abgelaufen ist;
wobei die vierten Informationen ferner verwendet werden, um die Weiterleitungsebenenvorrichtung anzuweisen, einen Status der Weiterleitungsebenenvorrichtung zu lesen und die gepufferte Ankündigungsnachricht gemäß dem Status der Weiterleitungsebenenvorrichtung zu aktualisieren; und,
die dritten Informationen ferner verwendet werden, um die Weiterleitungsebenenvorrichtung anzuweisen, die aktualisierte Ankündigungsnachricht an den Host zu senden, nachdem der zweite Zeitmesser abgelaufen ist.

5. Ankündigungsnachrichtverarbeitungsverfahren, Folgendes umfassend:
Empfangen (301) einer von einer Steuerebenenvorrichtung gesendeten ersten Nachricht durch eine Weiterleitungsebenenvorrichtung, wobei die erste Nachricht eine Ankündigungsnachricht, zweite Informationen und dritte Informationen umfasst, wobei die zweiten Informationen verwendet werden, um die Weiterleitungsebenenvorrichtung anzuweisen, die Ankündigungsnachricht zu puffern und die dritten Informationen verwendet werden, um die Weiterleitungsebenenvorrichtung anzuweisen, die gepufferte Ankündigungsnachricht an einen Host zu senden;
Puffern (302) der Ankündigungsnachricht gemäß den zweiten Informationen durch die Weiterleitungsebenenvorrichtung; und
Senden (303) der gepufferten Ankündigungsnachricht an den Host gemäß den dritten Informationen durch die Weiterleitungsebenenvorrichtung;
**dadurch gekennzeichnet, dass** die erste Nachricht ferner Identifikationsinformationen einschließt und die Identifikationsinformationen verwendet werden, um die Ankündigungsnachricht zu identifizieren;
wobei die erste Nachricht ferner vierte Informationen einschließt, wobei die vierten Informationen verwendet werden, um eine Weiterleitungsebenenvorrichtung anzuweisen, eine Weiterleitungsregel zu erzeugen;
die Weiterleitungsebenenvorrichtung die Weiterleitungsregel gemäß den vierten Informationen erzeugt, wobei die Weiterleitungsregel verwendet wird, um mit einer von dem Host gesendeten Ankündigungsanforderungsnachricht übereinzustimmen, und die Ankündigungsanforderungsnachricht verwendet wird, um anzufordern, dass die Weiterleitungsebenenvorrichtung die durch die Identifikationsinformationen identifizierte Ankündigungsnachricht sendet.

6. Verfahren nach Anspruch 5, wobei die dritten Informationen verwendet werden, um die Weiterleitungsebenenvorrichtung anzuweisen, einen Zeitmesser einzustellen und die Ankündigungsnachricht an den Host zu senden, nachdem der Zeitmesser abgelaufen ist; und
das Senden der gepufferten Ankündigungsnachricht an den Host gemäß den dritten Informationen durch die Weiterleitungsebenenvorrichtung Folgendes umfasst:
Einstellen des Zeitmessers gemäß den dritten Informationen durch die Weiterleitungsebenenvorrichtung und Senden der Ankündigungsnachricht an den Host, nachdem der Zeitmesser abgelaufen ist.

7. Verfahren nach Anspruch 5 oder 6, wobei die dritten Informationen verwendet werden, um die Weiterleitungsebenenvorrichtung anzuweisen, einen Status der Weiterleitungsebenenvorrichtung zu lesen und die gepufferte Ankündigungsnachricht gemäß dem Status der Weiterleitungsebenenvorrichtung zu aktualisieren;
die dritten Informationen ferner verwendet werden, um die Weiterleitungsebenenvorrichtung anzuweisen, einen ersten Zeitmesser einzustellen und die aktualisierte Ankündigungsnachricht an den Host zu senden, nachdem der erste Zeitmesser abgelaufen ist; und
das Senden der gepufferten Ankündigungsnachricht an den Host gemäß den dritten Informationen durch die Weiterleitungsebenenvorrichtung Folgendes umfasst:
Einstellen des ersten Zeitmessers gemäß den dritten Informationen durch die Weiterleitungsebenenvorrichtung und Senden der gepufferten Ankündigungsnachricht, die gemäß dem Lesestatus der Weiterleitungsebenenvorrichtung aktualisiert wird, an den Host, nachdem der erste Zeitmesser abgelaufen ist; oder
wobei die vierten Informationen ferner verwendet werden, um die Weiterleitungsebenenvorrichtung anzuweisen, einen Status der Weiterleitungsebenenvorrichtung zu lesen und die gepufferte Ankündigungsnachricht gemäß dem Status der Weiterleitungsebenenvorrichtung zu aktualisieren;
die Weiterleitungsebenenvorrichtung den Status der Weiterleitungsebenenvorrichtung gemäß den vierten Informationen liest und die gepufferte Ankündigungsnachricht gemäß dem Status der Weiterleitungsebenenvorrichtung aktualisiert; und
das Senden der gepufferten Ankündigungsnachricht an den Host gemäß den dritten Informationen durch die Weiterleitungsebenenvorrichtung Folgendes umfasst:
Einstellen eines ersten Zeitmessers gemäß den dritten Informationen durch die Weiterleitungsebenenvorrichtung und Senden der aktualisierten Ankündigungsnachricht an den Host, nachdem der erste Zeitmesser abgelaufen ist.

8. Verfahren nach Anspruch 5 oder 6, wobei die dritten Informationen verwendet werden, um die Weiterleitungsebenenvorrichtung anzuweisen, einen ersten Zeitmesser und einen zweiten Zeitmesser einzustellen und die gepufferte Ankündigungsnachricht an den Host zu senden, nachdem der erste Zeitmesser abgelaufen ist;
die Weiterleitungsebenevorrichtung den ersten Zeitmesser und den zweiten Zeitmesser gemäß den dritten Informationen einstellt und die gepufferte Ankündigungsnachricht an den Host sendet, nachdem der erste Zeitmesser abgelaufen ist;
wobei die vierten Informationen ferner verwendet werden, um die Weiterleitungsebenenvorrichtung anzuweisen, einen Status der Weiterleitungsebenenvorrichtung zu lesen und die gepufferte Ankündigungsnachricht gemäß dem Status der Weiterleitungsebenenvorrichtung zu aktualisieren;
die dritten Informationen ferner verwendet werden, um die Weiterleitungsebenenvorrichtung anzuweisen, die aktualisierte Ankündigungsnachricht an den Host zu senden, nachdem der zweite Zeitmesser abgelaufen ist; und
wobei das Verfahren ferner Folgendes umfasst:
Senden der aktualisierten Ankündigungsnachricht an den Host gemäß den dritten Informationen durch die Weiterleitungsebenenvorrichtung, nachdem der zweite Zeitmesser abgelaufen ist.

9. Ankündigungsnachrichtverarbeitungseinrichtung, Folgendes umfassend:
ein Sendemodul (701), das konfiguriert ist, um eine erste Nachricht an eine Weiterleitungsebenenvorrichtung zu senden, wobei die erste Nachricht eine Ankündigungsnachricht, zweite Informationen und dritte Informationen umfasst, wobei die zweiten Informationen verwendet werden, um die Weiterleitungsebenenvorrichtung anzuweisen, die Ankündigungsnachricht zu puffern und die dritten Informationen verwendet werden, um die Weiterleitungsebenenvorrichtung anzuweisen, die gepufferte Ankündigungsnachricht an einen Host zu senden;
**dadurch gekennzeichnet, dass** das Einrichtungsverfahren ferner ein Empfangsmodul umfasst, das konfiguriert ist, um Identifikationsinformationen zu empfangen und die Identifikationsinformationen verwendet werden, um die Ankündigungsnachricht zu identifizieren;
wobei die erste Nachricht ferner vierte Informationen umfasst, wobei die vierten Informationen verwendet werden, um eine Weiterleitungsebenenvorrichtung anzuweisen, eine Weiterleitungsregel zu erzeugen, wobei die Weiterleitungsregel verwendet wird, um mit einer von dem Host gesendeten Ankündigungsanforderungsnachricht übereinzustimmen und die Ankündigungsanforderungsnachricht verwendet wird, um anzufordern, dass die Weiterleitungsebenenvorrichtung die durch die Identifikationsinformationen identifizierte Ankündigungsnachricht sendet.

10. Einrichtung nach Anspruch 9, wobei, dass die dritten Informationen verwendet werden, um die Weiterleitungsebenenvorrichtung anzuweisen, die gepufferte Ankündigungsnachricht an einen Host zu senden, Folgendes umfasst:
die dritten Informationen werden verwendet, um die Weiterleitungsebenenvorrichtung anzuweisen, einen Zeitmesser einzustellen und die Ankündigungsnachricht an den Host zu senden, nachdem der Zeitmesser abgelaufen ist.

11. Ankündigungsnachrichtverarbeitungseinrichtung, Folgendes umfassend:
ein Empfangsmodul (901), das konfiguriert ist, um eine erste von einer Steuerebenenvorrichtung gesendeten Nachricht zu empfangen, wobei die erste Nachricht eine Ankündigungsnachricht, zweite Informationen und dritte Informationen umfasst, wobei die zweiten Informationen verwendet werden, um die Weiterleitungsebenenvorrichtung anzuweisen, die Ankündigungsnachricht zu puffern und die dritten Informationen verwendet werden, um die Weiterleitungsebenenvorrichtung anzuweisen, die gepufferte Ankündigungsnachricht an einen Host zu senden;
ein Verarbeitungsmodul (902), das konfiguriert ist, um die Ankündigungsnachricht gemäß den zweiten Informationen zu puffern; und
ein Sendemodul (903), das konfiguriert ist, um die gepufferte Ankündigungsnachricht gemäß den dritten Informationen an den Host zu senden;
**dadurch gekennzeichnet, dass** die erste Nachricht ferner Identifikationsinformationen einschließt und die Identifikationsinformationen verwendet werden, um die Ankündigungsnachricht zu identifizieren;
wobei die erste Nachricht ferner vierte Informationen einschließt, wobei die vierten Informationen verwendet werden, um eine Weiterleitungsebenenvorrichtung anzuweisen, eine Weiterleitungsregel zu erzeugen;
die Weiterleitungsebenenvorrichtung die Weiterleitungsregel gemäß den vierten Informationen erzeugt, wobei die Weiterleitungsregel verwendet wird, um mit einer von dem Host gesendeten Ankündigungsanforderungsnachricht übereinzustimmen, und die Ankündigungsanforderungsnachricht verwendet wird, um anzufordern, dass die Weiterleitungsebenenvorrichtung die durch die Identifikationsinformationen identifizierte Ankündigungsnachricht sendet.

12. Einrichtung nach Anspruch 11, wobei die dritten Informationen verwendet werden, um die Weiterleitungsebenenvorrichtung anzuweisen, einen Zeitmesser einzustellen und die Ankündigungsnachricht an den Host zu senden, nachdem der Zeitmesser abgelaufen ist; und
das Verarbeitungsmodul ferner konfiguriert ist, um den Zeitmesser gemäß den dritten Informationen einzustellen und das Sendemodul anzuweisen, nachdem der Zeitmesser abgelaufen ist, das Sendemodul anzuweisen, die Ankündigungsnachricht an den Host zu senden.

## Revendications

1. Procédé de traitement d'un message publicitaire, comprenant :
l'envoi (201), par un dispositif de plan de commande, d'un premier message à un dispositif de plan d'acheminement, le premier message comprenant un message publicitaire, une deuxième information et une troisième information, la deuxième information étant utilisée pour ordonner au dispositif de plan d'acheminement de mettre en tampon le message publicitaire, et la troisième information étant utilisée pour ordonner au dispositif de plan d'acheminement d'envoyer le message publicitaire mis en tampon vers un hôte ;
**caractérisé en ce que** le procédé comprend en outre la réception, par le dispositif de plan de commande, d'informations d'identification provenant du dispositif de plan d'acheminement, et les informations d'identification sont utilisées pour identifier le message publicitaire ;
le premier message comprenant en outre une quatrième information, la quatrième information étant utilisée pour ordonner à un dispositif de plan d'acheminement de générer une règle d'acheminement, la règle d'acheminement étant utilisée pour faire correspondre un message de demande de publicité envoyé par l'hôte, et le message de demande de publicité étant utilisé pour demander au dispositif de plan d'acheminement d'envoyer le message publicitaire mis en tampon identifié par les informations d'identification.

2. Procédé selon la revendication 1, dans lequel la troisième information qui est utilisée pour ordonner au dispositif de plan d'acheminement d'envoyer le message publicitaire mis en tampon à un hôte comprend :
la troisième information est utilisée pour ordonner au dispositif de plan d'acheminement de régler une minuterie et d'envoyer le message publicitaire à l'hôte après l'expiration de la minuterie.

3. Procédé selon la revendication 1 ou 2, dans lequel la troisième information qui est utilisée pour ordonner au dispositif de plan d'acheminement d'envoyer le message publicitaire mis en tampon comprend :
la troisième information est utilisée pour ordonner au dispositif de plan d'acheminement de lire un état du dispositif de plan d'acheminement et de mettre à jour le message publicitaire mis en tampon en fonction de l'état du dispositif de plan d'acheminement ; et
la troisième information est en outre utilisée pour ordonner au dispositif de plan d'acheminement de régler une première minuterie et d'envoyer le message publicitaire mis à jour à l'hôte après l'expiration de la première minuterie ; ou
la quatrième information étant en outre utilisée pour ordonner au dispositif de plan d'acheminement de lire un état du dispositif de plan d'acheminement et de mettre à jour le message publicitaire mis en tampon en fonction de l'état du dispositif de plan d'acheminement ; et
la troisième information qui est utilisée pour ordonner au dispositif de plan d'acheminement d'envoyer le message publicitaire mis en tampon comprend :
la troisième information est utilisée pour ordonner au dispositif de plan d'acheminement de régler une première minuterie et d'envoyer le message publicitaire mis à jour à l'hôte après l'expiration de la première minuterie.

4. Procédé selon la revendication 1 ou 2, dans lequel la troisième information qui est utilisée pour ordonner au dispositif de plan d'acheminement d'envoyer le message publicitaire mis en tampon comprend :
la troisième information est utilisée pour ordonner au dispositif de plan d'acheminement de régler une première et une seconde minuterie et d'envoyer le message publicitaire mis en tampon à l'hôte après l'expiration de la première minuterie ;
la quatrième information étant en outre utilisée pour ordonner au dispositif de plan d'acheminement de lire un état du dispositif de plan d'acheminement et de mettre à jour le message publicitaire mis en tampon en fonction de l'état du dispositif de plan d'acheminement ; et
la troisième information est en outre utilisée pour ordonner au dispositif de plan d'acheminement d'envoyer le message publicitaire mis à jour à l'hôte après l'expiration de la seconde minuterie.

5. Procédé de traitement d'un message publicitaire, comprenant :
la réception (301), par un dispositif de plan d'acheminement, d'un premier message envoyé par un dispositif de plan de commande, le premier message comprenant un message publicitaire, une deuxième information et une troisième information, la deuxième information étant utilisée pour ordonner au dispositif de plan d'acheminement de mettre en tampon le message publicitaire, et la troisième information étant utilisée pour ordonner au dispositif de plan d'acheminement d'envoyer le message publicitaire mis en tampon à un hôte ;
la mise en tampon (302), par le dispositif de plan d'acheminement, du message publicitaire en fonction de la seconde information ; et
l'envoi (303), par le dispositif de plan d'acheminement, du message publicitaire mis en tampon à l'hôte en fonction de la troisième information ;
**caractérisé en ce que** le premier message comporte en outre des informations d'identification, et les informations d'identification sont utilisées pour identifier le message publicitaire ;
le premier message comportant en outre une quatrième information, la quatrième information étant utilisée pour ordonner à un dispositif de plan d'acheminement de générer une règle d'acheminement ;
le dispositif de plan d'acheminement génère la règle d'acheminement en fonction de la quatrième information, lorsque la règle d'acheminement est utilisée pour faire correspondre un message de demande de publicité envoyé par l'hôte, et le message de demande de publicité est utilisé pour demander au dispositif de plan d'acheminement d'envoyer le message publicitaire identifié par les informations d'identification.

6. Procédé selon la revendication 5, dans lequel la troisième information est utilisée pour ordonner au dispositif de plan d'acheminement de régler une minuterie et d'envoyer le message publicitaire à l'hôte après l'expiration de la minuterie ; et
l'envoi, par le dispositif de plan d'acheminement, du message publicitaire mis en tampon à l'hôte en fonction de la troisième information comprend :
le réglage, par le dispositif de plan d'acheminement, de la minuterie en fonction de la troisième information, et l'envoi du message publicitaire à l'hôte après l'expiration de la minuterie.

7. Procédé selon la revendication 5 ou 6, dans lequel la troisième information est utilisée pour ordonner au dispositif de plan d'acheminement de lire un état du dispositif de plan d'acheminement et de mettre à jour le message publicitaire mis en tampon en fonction de l'état du dispositif de plan d'acheminement ;
la troisième information est en outre utilisée pour ordonner au dispositif de plan d'acheminement de régler une première minuterie et d'envoyer le message publicitaire mis à jour à l'hôte après l'expiration de la première minuterie ; et
l'envoi, par le dispositif de plan d'acheminement, du message publicitaire mis en tampon à l'hôte en fonction de la troisième information comprend :
le réglage, par le dispositif de plan d'acheminement, de la première minuterie en fonction de la troisième information, et l'envoi, à l'hôte après l'expiration de la première minuterie, du message publicitaire mis en tampon qui est mis à jour en fonction de l'état de lecture du dispositif de plan d'acheminement ; ou
la quatrième information étant en outre utilisée pour ordonner au dispositif de plan d'acheminement de lire un état du dispositif de plan d'acheminement et de mettre à jour le message publicitaire mis en tampon en fonction de l'état du dispositif de plan d'acheminement ;
le dispositif de plan d'acheminement lit l'état du dispositif de plan d'acheminement en fonction de la quatrième information et met à jour le message publicitaire mis en tampon en fonction de l'état du dispositif de plan d'acheminement ; et
l'envoi, par le dispositif de plan d'acheminement, du message publicitaire mis en tampon à l'hôte en fonction de la troisième information comprend :
le réglage, par le dispositif du plan d'acheminement, d'une première minuterie en fonction de la troisième information, et l'envoi du message publicitaire mis à jour à l'hôte après l'expiration de la première minuterie.

8. Procédé selon la revendication 5 ou 6, dans lequel la troisième information est utilisée pour ordonner au dispositif de plan d'acheminement de régler une première et une seconde minuterie et d'envoyer le message publicitaire mis en tampon à l'hôte après l'expiration de la première minuterie ;
le dispositif de plan d'acheminement règle la première minuterie et la seconde minuterie en fonction de la troisième information, et envoie le message publicitaire mis en tampon à l'hôte après l'expiration de la première minuterie ;
la quatrième information étant en outre utilisée pour ordonner au dispositif de plan d'acheminement de lire un état du dispositif de plan d'acheminement et de mettre à jour le message publicitaire mis en tampon en fonction de l'état du dispositif de plan d'acheminement ;
la troisième information est en outre utilisée pour ordonner au dispositif de plan d'acheminement d'envoyer le message publicitaire mis à jour à l'hôte après l'expiration de la seconde minuterie ; et
le procédé comprenant en outre :
l'envoi, par le dispositif de plan d'acheminement, du message publicitaire mis à jour à l'hôte en fonction de la troisième information après l'expiration de la seconde minuterie.

9. Appareil de traitement de messages publicitaires, comprenant :
un module d'envoi (701), conçu pour envoyer un premier message à un dispositif de plan d'acheminement, le premier message comprenant un message publicitaire, une deuxième information et une troisième information, la deuxième information étant utilisée pour ordonner au dispositif de plan d'acheminement de mettre en tampon le message publicitaire, et la troisième information étant utilisée pour ordonner au dispositif de plan d'acheminement d'envoyer le message publicitaire mis en tampon à un hôte ;
**caractérisé en ce que** le procédé d'appareil comprend en outre un module de réception conçu pour recevoir des informations d'identification, et les informations d'identification sont utilisées pour identifier le message publicitaire ;
le premier message comprenant en outre une quatrième information, la quatrième information étant utilisée pour ordonner à un dispositif de plan d'acheminement de générer une règle d'acheminement, la règle d'acheminement étant utilisée pour faire correspondre un message de demande de publicité envoyé par l'hôte, et le message de demande de publicité étant utilisé pour demander au dispositif de plan d'acheminement d'envoyer le message publicitaire identifié par les informations d'identification.

10. Appareil selon la revendication 9, dans lequel la troisième information qui est utilisée pour ordonner au dispositif de plan d'acheminement d'envoyer le message publicitaire mis en tampon à un hôte comprend :
la troisième information est utilisée pour ordonner au dispositif de plan d'acheminement de régler une minuterie et d'envoyer le message publicitaire à l'hôte après l'expiration de la minuterie.

11. Appareil de traitement de messages publicitaires, comprenant :
un module de réception (901), conçu pour recevoir un premier message envoyé par un dispositif de plan de commande, le premier message comprenant un message publicitaire, une deuxième information et une troisième information, la deuxième information étant utilisée pour ordonner au dispositif de plan d'acheminement de mettre en tampon le message publicitaire, et la troisième information étant utilisée pour ordonner au dispositif de plan d'acheminement d'envoyer le message publicitaire mis en tampon à un hôte ;
un module de traitement (902), conçu pour mettre en tampon le message publicitaire en fonction de la deuxième information ; et
un module d'envoi (903), conçu pour envoyer le message publicitaire mis en tampon à l'hôte en fonction de la troisième information ;
**caractérisé en ce que** le premier message comporte en outre des informations d'identification, et les informations d'identification sont utilisées pour identifier le message publicitaire ;
le premier message comportant en outre une quatrième information, la quatrième information étant utilisée pour ordonner à un dispositif de plan d'acheminement de générer une règle d'acheminement ;
le dispositif de plan d'acheminement génère la règle d'acheminement en fonction de la quatrième information, lorsque la règle d'acheminement est utilisée pour faire correspondre un message de demande de publicité envoyé par l'hôte, et le message de demande de publicité est utilisé pour demander au dispositif de plan d'acheminement d'envoyer le message publicitaire identifié par les informations d'identification.

12. Appareil selon la revendication 11, dans lequel la troisième information est utilisée pour ordonner au dispositif de plan d'acheminement de régler une minuterie et d'envoyer le message publicitaire à l'hôte après l'expiration de la minuterie ; et
le module de traitement est en outre conçu pour régler la minuterie en fonction de la troisième information et pour ordonner au module d'envoi de donner l'instruction au module d'envoi, après l'expiration de la minuterie, d'envoyer le message publicitaire à l'hôte.
